# EUROPEAN PATENT SPECIFICATION

(11) **EP 2 967 094 B1**
(45) Date of publication and mention of the grant of the patent: **30.12.2020**
(21) Application number: 14774486.6
(22) Date of filing: 05.03.2014
(51) Int. Cl.: A23C 9/158, A23C 9/152

(54) **HIGH FAT HUMAN MILK PRODUCTS**
MENSCHLICHE MILCHPRODUKTE MIT HOHEM FETTGEHALT
PRODUITS À BASE DE LAIT MATERNEL À FORTE TENEUR LIPIDIQUE

(30) Priority: 13.03.2013 US 201361779781 P
(43) Date of publication of application: 20.01.2016
(73) Proprietor: Prolacta Bioscience, Inc., City of Industry, CA 91746 (US)
(72) Inventor: ELSTER, Scott, City of Industry, CA 91746 (US); FOURNELL, Joe, City of Industry, CA 91746 (US); EAKER, Scott, City of Industry, CA 91746 (US)
(74) Representative: Cooley (UK) LLP
(86) International application number: PCT/US2014/020837
(87) International publication number: WO 2014/158911

(56) References cited:
- WO-A1-2014/158907
- WO-A2-2008/067486
- WO-A2-2008/073888
- US-A1- 2008 124 430
- US-A1- 2008 124 430
- US-A1- 2011 206 684
- US-A1- 2013 059 815
- US-B2- 8 278 046
- Frank Lake: "BREAST MILK ICE CREAM | Weekly World News", , 25 February 2011 (2011-02-25), XP055324916, Retrieved from the Internet: URL:http://weeklyworldnews.com/headlines/2 9979/breast-milk-ice-cream/ [retrieved on 2016-11-30]
- Edith Zimmerman: "But What Does Breastmilk Cheese Taste Like?", , 18 January 2011 (2011-01-18), pages 1-3, XP055324917, Retrieved from the Internet: URL:https://thehairpin.com/but-what-does-b reastmilk-cheese-taste-like-3df200ea554b#. qkxr5lv8e [retrieved on 2016-11-30]
- duckduckgosling: "Breastmilk Ice Cream", youtube, 11 April 2012 (2012-04-11), page 2 pp., XP054976962, Retrieved from the Internet: URL:www.youtube.com/watch?v=yMoJhJYvmYQ [retrieved on 2016-12-01]
- Regina Yunghans: "8 Alternative Uses for Breastmilk-alternative-uses-for-breastm", , 8 July 2011 (2011-07-08), XP055325257, Retrieved from the Internet: URL:http://www.thekitchn.com/8-alternative -uses-for-breastm-150830 [retrieved on 2016-12-01]
- S K T Polberger ET AL: "Growth of Very Low Birth Weight Infants on Varying Amounts of Human Milk Protein", Pediatric Research, vol. 25, no. 4, 1 April 1989 (1989-04-01), pages 414-419, XP055527745, US ISSN: 0031-3998, DOI: 10.1203/00006450-198904000-00022
- Carl A Kuschel ET AL: "Fat supplementation of human milk for promoting growth in preterm infants", Cochrane Database of Systematic Reviews, 24 April 2000 (2000-04-24), page 3pp, XP055527645, US ISSN: 1465-1858, DOI: 10.1002/14651858.CD000341
- AMY B. HAIR ET AL: "Randomized Trial of Human Milk Cream as a Supplement to Standard Fortification of an Exclusive Human Milk-Based Diet in Infants 750-1250?g Birth Weight", JOURNAL OF PEDIATRICS., vol. 165, no. 5, 1 November 2014 (2014-11-01), pages 915-920, XP055324892, US ISSN: 0022-3476, DOI: 10.1016/j.jpeds.2014.07.005
- AMY B. HAIR ET AL: "Premature Infants 750-1,250?g Birth Weight Supplemented with a Novel Human Milk-Derived Cream Are Discharged Sooner", BREASTFEEDING MEDICINE, vol. 11, no. 3, 1 April 2016 (2016-04-01), pages 133-137, XP055527751, US ISSN: 1556-8253, DOI: 10.1089/bfm.2015.0166
- Amy B Hair: "Innovations in Human Milk: Putting Evidence to Practice", , 15 August 2011 (2011-08-15), pages 1-49, XP055617580, Retrieved from the Internet: URL:http://www.nicuniversity.org/Portals/1 /Downloads/Prolacta_Sympo_Hair.pptx [retrieved on 2019-09-02]
- Richard J Schanler ET AL: "FETAL AND NEONATAL MEDICINE", R, 1 January 1985 (1985-01-01), pages 437-445, XP055617601, Retrieved from the Internet: URL:https://www.jpeds.com/article/S0022-34 76(85)80531-X/pdf [retrieved on 2019-09-02]

## Description

### FIELD OF THE INVENTION

The present disclosure relates generally to high fat human milk products, such as standardized human cream compositions, methods of producing the compositions, and methods of using the compositions.

### BACKGROUND OF THE INVENTION

Human breast milk is considered the nutrition of choice for infants, including those in the neonatal intensive care unit (NICU) (American Academy of Pediatrics, Section on Breastfeeding. Breastfeeding and the Use of Human Milk. Pediatrics, 115:496-506, 2005). Typically, the human milk used in the NICU is from the baby's own mother, but it may also come from a donor. In the case of very-low birth weight (VLBW) infants, the milk is often supplemented with a human milk fortifier in order to provide the extra nutrition that these babies need.

While human milk is rarely analyzed for nutritional content, it has generally been assumed that human milk contains approximately 67.6 kcal/100 mL (20 kcal/oz). However, Wojcik et al. (JAm Diet Assoc, 109:137-140, 2009) showed that this is often not the case with 25% of samples from a survey of 415 human breast milk donation samples having below 58.5 kcal /100 mL (17.3 kcal/oz) and 65% of the samples having below 67.6 kcal/100 mL (20 kcal/oz). As a result, the expected energy and nutrient content is not achieved a significant percentage of the time. The net result is that the infant does not obtain the desired growth pattern, particularly with regard to weight. Current solutions to this problem include intravenous feeding of infants through the process of total parenteral nutrition (TPN). While TPN is effective at delivering the required level of nutrition to VLBW infants, it is also associated with many negative side effects including, for example, liver damage.

Thus, a solution is needed to solve the problem of low calorie human milk production that avoids the unwanted harmful side effects of TPN. The current invention solves the problem by providing a pasteurized, high fat human milk product that can be administered enterally and increase the caloric content of human milk while not substantially increasing the overall volume fed to the infant.

### SUMMARY OF THE INVENTION

The invention herein is as defined by the claims.

This disclosure features high fat human milk products, e.g., human cream compositions, as well as methods of making and methods of using the high fat human milk products.

In an aspect of the invention, there is provided a human milk cream composition according to claim 1.
The human milk cream composition comprises pasteurized cream derived from human milk, wherein the composition comprises 2.5 kcal/ml and 25% fat. In another embodiment, the human cream composition further comprises human skim milk permeate. In yet another embodiment, the human cream composition further comprises deionized water.

The composition is for enteral nutrition. In a particular embodiment, the enteral nutrition is for a low birth weight infant.

In another aspect of the invention, there is provided a method of making a human milk cream composition according to claim 3.
The method of making a human milk cream composition comprises the steps of: separating a pool of human milk into a cream portion and a skim milk portion, formulating the cream portion to obtain a cream composition comprising 2.5 kcal/ml and 25% fat, and pasteurizing the cream composition. The formulating step comprises measuring the caloric content of the cream portion, and if the cream portion is above 2.5 kcal/mL, adding a volume of permeate obtained from ultrafiltration of the skim milk portion or deionized water to the cream portion. In one embodiment, the separating step is via ultracentrifugation.

In one embodiment, the method of making a human milk cream composition further comprises ultra filtering water from the skim milk portion, thereby obtaining a human skim milk permeate. In a related embodiment, the formulating step comprises adding a volume of the human skim milk permeate to the cream portion. In another embodiment, the formulating step comprises adding a volume of deionized water to the cream portion.

In yet another embodiment, the method of making a human milk cream composition further comprises a step of testing the pool of human milk for adulterants, contaminants, drugs and/or pathogens. In one embodiment, the testing step comprises testing using a microorganism panel. In another embodiment, the testing step comprises PCR analysis for HIV, HBV and HCV. In one embodiment, the testing step detects bovine protein. In yet another embodiment, the testing step comprises testing for one or more drugs. In a related embodiment, the one or more drugs are selected from amphetamines, benzodiazepine, cocaine, methamphetamines, opiates, synthetic opioids (e.g. oxycodone/oxymorphone), THC, and principle metabolites thereof.

In one embodiment of the method, the pool of human milk is from one or more donors.

Also disclosed herein is a method of increasing the caloric content of human milk to a desired caloric content level, comprising the steps of: obtaining a sample of human milk, measuring the caloric content of the human milk, determining a volume of a human milk cream composition needed to raise the caloric content of the human milk to the desired caloric content level, and adding the volume of the human milk cream composition to the container of human milk. In one example, the desired caloric content is 67.6 kcal/100 mL (20 kcal/oz).

In some disclosures of the method of increasing the caloric content of human milk, the human milk cream composition comprises about 2.5 kcal/ml. In a related disclosure, the human milk cream composition comprises about 25% fat.

In some disclosures of the method, the human milk is for enteral nutrition. In a related example, the enteral nutrition is for a low birth weight infant.

### DETAILED DESCRIPTION OF THE INVENTION

The compositions and methods featured herein relate to human milk cream products. The rationale behind supplementing human milk (e.g., mother's or donor) stems from the finding that milk from mothers who deliver significantly prematurely does not have adequate nutritional content to completely meet the increased metabolic and growth needs of their infants relative to a full-term infant (Hawthorne et al., Minerva Pediatr, 56:359-372, 2004; Lawrence and Lawrence, Breastfeeding: A Guide for the Medical Profession, 6th edition. Philadelphia: Elsevier Mosby, 2005; and Ziegler, Human Milk for the Preterm Infant, International Congress of the Human Milk Banking Association of North America. Alexandria, VA, 2005).

Interestingly, so called "pre-term milk" may contain higher levels of protein than milk from a mother who has delivered at term (Hawthorne et al., Minerva Pediatr, 56:359-372, 2004; Lawrence and Lawrence, Breastfeeding: A Guide for the Medical Profession, 6th edition. Philadelphia: Elsevier Mosby, 2005; and Ziegler, Human Milk for the Preterm Infant, International Congress of the Human Milk Banking Association of North America. Alexandria, VA, 2005). Yet, these levels are still inadequate to ensure appropriate initial levels of growth and development and beyond, particularly in infants of a size destined not to survive in the days before neonatal intensive care. It is also the case that these elevated nutrition levels are relatively short-lived, and the "pre-term milk" rapidly becomes indistinguishable from term milk. Thus, it is critical that the nutritional content of the daily feedings for these infants meet acceptable levels of key components such as calories and protein.

However, the caloric content of the human milk supplied to infants is very rarely measured. As demonstrated by the study performed by Wocjik et al. (J Am Diet Assoc, 109:137-140, 2009), it is likely that the human milk being supplied to LBW and VLBW infants is often not providing a sufficient amount of calories to meet the nutritional needs of a pre-term infant. The high fat human milk compositions described herein provide a solution to this problem and may be used, e.g., to supplement human milk in order to increase the caloric content to the desired level without increasing the volume to be fed to the infant, e.g., a LBW infant. This is particularly useful when all that is needed is increased caloric intake and not increased protein content. The compositions of the current invention solve this problem by increasing calories without increasing protein and therefore provide a more cost effective solution to the problem.

Total parenteral nutrition (TPN), a process of providing nutrition intravenously and bypassing the gastrointestinal tract, is often used to feed LBW infants. However, TPN is associated with several potential complications including, e.g., hyperglycemia, hypoglycemia, lipogenesis, hepatic complications (e.g., fatty liver and cholestasis), sepsis, and blood clots. In particular, the high fat and high protein requirements of the LBW infant tend to result in liver dysfunction when the nutrition is received parenterally. Accordingly, it is desirable to provide an infant with enteral nutrition as soon as possible rather than TPN, in order to avoid the negative effects associated with TPN. The high fat human milk compositions described herein can be used to increase the caloric content and fat content of human milk, thereby providing means for enteral delivery of human milk fat. Maintaining a fully human milk based diet reduces the incidence of complications such as necrotizing enterocolitis, and therefore, it is contemplated that enteral feeds of human milk supplemented with high fat human milk products may be used in place of TPN.

The terms "premature," "preterm," and "low-birth-weight (LBW)" infants are used interchangeably and refer to infants born less than 37 weeks gestational age and/or with birth weights less than 2500 g. In particular, the term "very-low-birth-weight (VLBW)" infant refers to an infant with a birth weight of 1250 g or less. Accordingly, the term "LBW infants" includes VLBW infants.

The term "whole milk" refers to human milk from which no fat has been removed.

By "bioburden" is meant microbiological contaminants and pathogens (generally living) that can be present in milk, e.g., viruses, bacteria, mold, fungus and the like.

Unless defined otherwise, technical and scientific terms used herein have the same meaning as that commonly understood by one of skill in the art.

### Human Cream Compositions

The high fat human milk compositions, or human cream compositions, described herein are produced from whole human milk. The human cream composition comprises 2.5 kcal/ml and 25% fat.

It is contemplated that the human cream compositions described herein may comprise one or more additional components in order to have the desired caloric content and/or desired percentage of fat. Accordingly, in one embodiment, the human cream composition comprises added human skim milk permeate. The skim milk permeate ("permeate") is the liquid produced by the ultrafiltration of human skim milk traditionally thought to be a waste product in the manufacture of human milk fortifers. In another embodiment, the human cream composition comprises deionized (DI) water in addition to high fat human milk.

Generally, the human cream composition is frozen for storage and/or shipment and is thawed prior to use.

### Methods of Making Human Cream Compositions

The human cream compositions described herein are produced from whole human milk. The human milk may be from an infant's own mother or from one or more donors. The human milk is pooled to provide a pool of human milk. For example, a pool of human milk comprises milk from two or more (e.g., ten or more) donors. As another example, a pool of human milk comprises two or more donations from one donor.

### Obtaining Donor Milk

Generally, human milk is provided by donors, and the donors are pre-screened and approved before any milk is processed. Various techniques are used to identify and qualify suitable donors. A potential donor must obtain a release from her physician and her child's pediatrician as part of the approval process. This helps to insure, *inter alia,* that the donor is not chronically ill and that her child will not suffer as a result of the donation(s). Methods and systems for qualifying and monitoring milk collection and distribution are described, e.g., in U.S. Patent Application No. 12/728,811 (U.S. 2010/0268658). Donors may or may not be compensated for their donation.

Usually, donor screening includes a comprehensive lifestyle and medical history questionnaire that includes an evaluation of prescription and non-prescription medications, testing for drugs of abuse, and testing for certain pathogens. The donor may be screened for, e.g., human immunodeficiency virus Type 1 (HIV-1), HIV-2, human T-lymphotropic virus Type 1 (HTLV- I), HTLV-II, hepatitis B virus (HBV), hepatitis C virus (HCV), and syphilis.

Donors may be periodically requalified. For example, a donor is required to undergo screening by the protocol used in their initial qualification every four months, if the donor wishes to continue to donate. A donor who does not requalify or fails qualification is deferred until such time as they do, or permanently deferred if warranted by the results of requalification screening. In the event of the latter situation, all remaining milk provided by that donor is removed from inventory and destroyed or used for research purposes only.

A donor may donate at a designated facility (e.g., a milk bank office) or, in a preferred embodiment, express milk at home. If the donor will be expressing milk at home, she will measure the temperature in her freezer with, e.g., a supplied thermometer to confirm that it is cold enough to store human milk in order to be approved.

### Testing Donor Identity

Once the donor has been approved, donor identity matching may be performed on donated human milk because the milk may be expressed by a donor at her home and not collected at a milk banking facility. In a particular embodiment, each donor's milk can be sampled for genetic markers, e.g., DNA markers, to guarantee that the milk is truly from the approved donor. Such subject identification techniques are known in the art (see, e.g., International Application Serial No. PCT/US2006/36827). The milk may be stored (e.g., at - 20°C or colder) and quarantined until the test results are received.

For example, a biological reference sample may be obtained from a potential human breast milk donor. Such sample may be obtained by methods known in the art such as, but not limited to, a cheek swab sample of cells, or a drawn blood sample, milk, saliva, hair roots, or other convenient tissue. Samples of reference donor nucleic acids (e.g., genomic DNA) can be isolated from any convenient biological sample including, but not limited to, milk, saliva, buccal cells, hair roots, blood, and any other suitable cell or tissue sample with intact interphase nuclei or metaphase cells. The sample is labeled with a unique reference number. The sample can be analyzed at or around the time of obtaining the sample for one or more markers that can identify the potential donor. Results of the analysis can be stored, e.g., on a computer-readable medium. Alternatively, or in addition, the sample can be stored and analyzed for identifying markers at a later time.

It is contemplated that the biological reference sample may be DNA typed by methods known in the art such as STR analysis of STR loci, HLA analysis of HLA loci or multiple gene analysis of individual genes/alleles. The DNA-type profile of the reference sample is recorded and stored, e.g., on a computer-readable medium.

It is further contemplated that the biological reference sample may be tested for self-antigens using antibodies known in the art or other methods to determine a self-antigen profile. The antigen (or another peptide) profile can be recorded and stored, e.g., on a computer-readable medium.

A test sample of human milk is taken for identification of one or more identity markers. The sample of the donated human milk is analyzed for the same marker or markers as the donor's reference sample. The marker profiles of the reference biological sample and of the donated milk are compared. The match between the markers (and lack of any additional unmatched markers) would indicate that the donated milk comes from the same individual as the one who donated the reference sample. Lack of a match (or presence of additional unmatched markers) would indicate that the donated milk either comes from a non-tested donor or has been contaminated with fluid from a non-tested donor.

The donated human milk sample and the donated reference biological sample can be tested for more than one marker. For example, each sample can be tested for multiple DNA markers and/or peptide markers. Both samples, however, need to be tested for at least some of the same markers in order to compare the markers from each sample.

Thus, the reference sample and the donated human milk sample may be tested for the presence of differing identity marker profiles. If there are no identity marker profiles other than the identity marker profile from the expected subject, it generally indicates that there was no fluid (e.g., milk) from other humans or animals contaminating the donated human milk. If there are signals other than the expected signal for that subject, the results are indicative of contamination. Such contamination will result in the milk failing the testing.

The testing of the reference sample and of the donated human milk can be carried out at the donation facility and/or milk processing facility. The results of the reference sample tests can be stored and compared against any future donations by the same donor.

### Screening for Contaminants

The milk is then tested for pathogens. The milk may be genetically screened, e.g., by polymerase chain reaction (PCR), to identify, e.g., viruses, such as HIV-1, HBV and HCV. A microorganism panel that screens for various bacterial species, fungus and mold via culture may also be used to detect contaminants. For example, a microorganism panel may test for aerobic count, *Bacillius cereus, Escherichia coli, Salmonella, Pseudomonas,* coliforms, *Staphylococcus aureus,* yeast and mold. In particular, *B. cereus* is a pathogenic bacterium that cannot be removed through pasteurization. Pathogen screening may be performed both before and after pasteurization.

In addition to screening for pathogens, the donor milk may also be tested for drugs of abuse (e.g., cocaine, opiates, synthetic opioids (e.g. oxycodone/oxymorphone) methamphetamines, benzodiazepine, amphetamines, and THC) and/or adulterants such as non-human proteins. For example, an ELISA may be used to test the milk for a non-human protein, such as bovine proteins, to ensure, e.g., that cow milk or cow milk infant formula has not been added to the human milk, for example to increase donation volume when donors are compensated for donations.

### Processing Human Milk

Once the human milk has been screened, it is processed to produce a high fat product, e.g., a human cream composition. The donation facility and milk processing facility can be the same or different facility. Processing of milk can be carried out with large volumes of human milk, e.g., about 75 liters/lot to about 2,000 liters/lot of starting material.

Methods of obtaining compositions that include lipids from human milk to provide nutrition to patients are described in PCT Application PCT/US07/86973 filed on December 10, 2007 (WO 2008/073888).

After the human milk is carefully analyzed for both identification purposes and to avoid contamination as described above, the milk then undergoes filtering, e.g., through about a 200 micron filter, and heat treatment. For example, the composition can be treated at about 63°C or greater for about 30 minutes or more. Next, the milk is transferred to a separator, e.g., a centrifuge, to separate the cream (i.e., the fat portion) from the skim. The skim can be transferred into a second processing tank where it remains at about 2 to 8°C until a filtration step. Optionally, the cream separated from the skim, can undergo separation again to remove more skim.

Following the separation of cream and skim, the skim portion undergoes further filtration, e.g., ultrafiltration. This process concentrates the nutrients in the skim milk by filtering out the water. The water obtained during the concentration is referred to as the permeate. The resulting skim portion can be further processed to produce human milk fortifiers and/or standardized human milk formulations.

Processing of human milk to obtain human milk fortifiers (e.g., PROLACTPLUS™ Human Milk Fortifiers, e.g., PROLACT+4™, PROLACT+6™, PROLACT+8™, and/or PROLACT+10™, which are produced from human milk and contain various concentrations of nutritional components) and the compositions of the fortifiers are described in U.S. Patent Application Serial No. 11/947,580, filed on November 29, 2007, (U.S. 2008/0124430). These fortifiers can be added to the milk of a nursing mother to enhance the nutritional content of the milk for, e.g., a preterm infant.

Methods of obtaining standardized human milk formulations (exemplified by PROLACT20™, NEO20™, and/or PROLACT24) and formulations themselves are also discussed in U.S. Patent Application Serial No. 11/947,580, filed on November 29, 2007, (U.S. 2008/0124430). These standardized human milk formulations can be used to feed, e.g., preterm infants. They provide a nutritional human-derived formulation and can substitute for mother's milk.

### Formulating Human Cream Compositions

Once the cream portion has been separated from the skim portion, the caloric content of the cream portion is measured. In one preferred embodiment, if the caloric content or the percentage of fat of the cream portion is above a desired level, a volume of the permeate from the ultrafiltration of the skim portion may be added to the cream portion, thereby providing a formulated human cream composition that has the desired caloric content. Alternatively, in another preferred embodiment, deionized water may be added to the cream portion in order to provide the formulated human cream composition. The desired caloric content is 2.5 kcal/ml, and the desired percentage of fat is about 25% lipids.

### Packaging and Pasteurization

After optionally adding permeate or deionized water to the cream, the cream composition undergoes pasteurization. For example, the composition can be placed in a process tank that is connected to the high-temperature, short-time (HTST) pasteurizer via platinum-cured silastic tubing. After pasteurization, the cream composition can be collected into a second process tank and cooled. Other methods of pasteurization known in the art can be used. For example, in vat pasteurization the cream composition in the tank is heated to a minimum of 63°C and held at that temperature for a minimum of thirty minutes. The air above the cream composition is steam heated to at least three degrees Celsius above the cream composition temperature. In one embodiment, the product temperature is about 66°C or greater, the air temperature above the product is about 69°C or greater, and the product is pasteurized for about 30 minutes or longer. In another embodiment, both HTST and vat pasteurization are performed.

The pasteurized cream composition is generally processed aseptically. After cooling to about 2 to 8°C, the product is filled into containers of desired volumes, and various samples of the cream composition are taken for nutritional and bioburden analysis. The nutritional analysis ensures proper calorie and fat content of the cream composition. A label that reflects the nutritional analysis is generated for each container. The bioburden analysis tests for presence of contaminants, e.g., total aerobic count, *B. cereus, E. coli, Coliform, Pseudomonas, Salmonella, Staphylococcus,* yeast, and/or mold. Bioburden testing can be genetic testing. The product is packaged and shipped once the analysis is complete and desired results are obtained.

The resultant human cream composition comprises 2.5 kcal/ml and 25% fat.

### Use of Human Cream Compositions

The human cream compositions described herein may be used as supplemental nutrition. Accordingly, the human cream compositions described herein may be administered enterally or orally (e.g., bottle feeding). The use of human lipids for parenteral nutrition, a practice of intravenous feeding (e.g., total parenteral nutrition), for a patient in need thereof is described in PCT Application PCT/US07/86973 filed on December 10, 2007 (WO 2008/073888).

The disclosed human cream compositions are particularly useful for supplementing human milk for infants, especially LBW infants, in order to raise the caloric content of the human milk to a desired level. Human milk is often administered enterally to preterm infants in the NICU. Enteral nutrition is a practice of tube feeding, e.g., nasogastric, transpyloric, and percutaneous. Human milk (e.g., mother's own or donor) often does not meet the caloric requirements of a LBW infant (Wocjik et al. JAm Diet Assoc, 109:137-140, 2009). Therefore, the human cream composition of the current invention may be added to the human milk, thereby increasing the caloric content while also maintaining the entirely human milk diet of the infant and avoiding the complications associated with TPN. In one embodiment, the enteral nutrition comprising the human cream composition is for a preterm or LBW infant.

Also disclosed herein is a method of increasing the caloric content of human milk to a desired caloric content level. The method comprises the steps of obtaining a sample of human milk (e.g., mother's own or donor or pool of milk derived from the mother and/or donors), measuring the caloric content of the human milk, determining a volume of a human milk cream composition needed to raise the caloric content of the human milk to the desired caloric content level, and adding the volume of the human milk cream composition to the container of human milk. For example, the desired caloric content is 67.6 kcal/100 mL (20 kcal/oz) or more. In another example, the desired calorie target is 81.2 kcal /100 mL (24 kcal/oz) or more. In another example, the desired calorie target is 87.9 kcal /100 mL (26 kcal/oz) or more. The human milk cream composition used to increase the caloric content of the human milk comprises 2.5 kcal/ml and 25% fat.

In some instances, it may be desirable to reduce the amount of human milk that the human cream composition is added to in order to keep the total volume administered or fed to the infant the same. For example, an equal volume of human milk may be removed prior to the addition of the cream composition.

### EXAMPLES

The following examples are intended to illustrate but not limit the disclosure.

### EXAMPLE 1

### STANDARDIZED HUMAN MILK CREAM PRODUCT

In order to provide a nutritional supplement that can add the desired amounts of calories to mother's own or donor milk without adding a significant amount of volume, a human cream composition was produced that can be delivered enterally, thereby avoiding the negative effects associated with TPN. Human milk from previously screened and approved donors was mixed together to generate a pool of donor milk. In a clean room environment, the pool of donor milk was further tested for specific pathogens and bovine proteins. Specifically, PCR testing was used to screen for the presence of HIV-1, HBV, and HCV in the milk. A microbiological panel was also performed that tests for, e.g., aerobic count, *Bacillius cereus, Escherichia coli, Salmonella, Pseudomonas,* coliforms, *Staphylococcus aureus,* yeast and mold.

The pool of donor milk was ultracentrifuged to generate a cream portion and a skim milk portion. The cream portion was then formulated to meet specific fat and calorie specifications by adding an amount of the water ultra-filtered from the skim portion, the human skim milk ultrafiltration permeate. Specifically, the cream portion was standardized to 25% lipids and contained about 2.5 kcal/ml.

The standardized cream composition was then pasteurized following guidance set by the FDA's Pasteurized Milk Ordinance. Following pasteurization, the standardized cream composition was then filled into high density polyethylene bottles and frozen. The bottles were weighed to ensure that the intended volume was filled into the bottle. The bottled cream composition was then quarantined until all data from the microbiological panel was reviewed and a full nutritional analysis was performed.

The bottled cream composition was labeled with a lot specific "use by" date and product lot number. The cream product was then shipped frozen to the destination, e.g., hospital, in an insulated cooler packed with dry ice.

### EXAMPLE 2

### ENTERAL ADMINISTRATION OF HUMAN MILK CREAM PRODUCT TO VLBW INFANTS

In order to evaluate the short-term effect of the use of a human cream composition, Prolact CR™, to supplement low caloric content human milk for very low birth weight (VLBW) neonates, human milk comprising less than 67.6 kcal /100 mL (20 kcal/oz) was supplemented with the human cream in addition to a human milk fortifier (Prolact+ H²MF®)(i.e., the cream adjusted milk arm or treatment arm) or with the human milk fortifier without a human cream supplement (i.e., the non-adjusted milk am or control group).

Seventy eight pre-term infants were randomized into either the cream supplement group or the control group that did not receive the human cream supplement. Each study group used the human milk-based fortifier Prolact+ H²MF® according to the standard of practice. Typically fortification begins when the infant receives up to about 100 ml/kg/day of enteral nutrition. Milk for the cream test group was supplemented with the human cream composition after fortification began and was determined to be tolerated, usually one day later.

The actual daily feeding amounts during the study were not controlled, with the exception of the human cream composition which was given in an amount to achieve a caloric level of mother's milk/donor milk of 67.6 kcal /100 mL (20 kcal/oz) where necessary. The use of the fortifier, both the timing of initiation and stepping protocol, were determined according to local standard of care.

This study was designed to evaluate a null hypothesis of inferior results with respect to the rate of weight gain between the two study groups using the following formulas where µ is the mean rate of weight gain in the respective study group:
H₀: µ_{cream} - µₙₒ cream ≤ -3 g/kg/day and Ha: µ_{cream} - µₙₒ cream > -3 g/kg/day.
Data were also collected on the rate of change of head circumference and body length. However, these were tested based on the usual superiority paradigm. The rate of weight gain for any infant that did not complete the full study period was calculated over the period for which the infant remained in the study.

The study subjects were followed until the first of the following periods: 36 weeks corrected gestational age or weaned from fortification, whichever came first; discharge; transfer from the medical institution; or death. Corrected gestational age was calculated as gestational age at birth + chronological age.

The study subjects were selected based on a series of inclusion and exclusion criteria. All study subjects met all of the inclusion criteria and none of the exclusion criteria listed below. The five inclusion criteria were as follows:
1. Birth weight between 750 and 1250 g
2. Have a reasonable expectation of survival for the maximum duration of the study (through 36 weeks corrected gestational age or weaned from fortification, whichever came first)
3. Must be able to adhere to a feeding protocol involving mother's own milk/donor milk that will include fortification using Prolact+ H²MF® and, potentially, human cream
4. Enteral feeding must begin before the 21^{st} day of life
5. Informed consent obtained from parent or legal guardian.

The eight exclusion criteria were as follows:
1. Less than a reasonable expectation of survival for the infant's particular gestational age through the study period
2. Enrolled in any other clinical study affecting nutritional management during the study period
3. Decision to not start minimum enteral feed before day 21 of life
4. Unable to obtain informed consent from parent or legal guardian prior to the initiation of enteral feeding
5. Presence of clinically significant congenital heart disease
6. Presence of any major congenital malformations
7. Reasonable potential for early transfer to non-study institution
8. Unable to participate for any reason based on the decision of the study investigator.

After eligibility of the infant was determined and informed consent was obtained from the parent or legal guardian, infants were randomized using a stratified (by study site) block scheme into either the test group that received the human cream supplement or the control group that did not receive the human cream supplement. All other nutrition (e.g., human milk and Prolact+ H²MF®) was provided in the same fashion and according to institutional standard practice for both study groups.

The randomization was performed in blocks of 4 without the use of stratification variables except for study site because of the small study size. Block size was kept blinded. While blinding of study groups is always desirable in randomized studies, because of the nature of the interventions, e.g., the need to test the human milk in only one group and the methods by which the nutrition was prepared and delivered, it was not possible for this study.

The number of infants included in this study was based first on the primary endpoint of the rate of weight gain over the period of the initiation of enteral feeding through 36 weeks corrected gestational age or when the infant was weaned from fortification, whichever came first. A study of human milk and Prolact+ H²MF® by Sullivan et al. (J Pediatrics, 156:562-567, 2010) demonstrated a standard deviation of weight gain of 4 g/kg/day. The goal of the trial was to show a lack of inferiority in the mean weight gain for the cream test group when compared to the control group. Lack of inferiority has been defined as a difference of weight gain of less than 3 g/kg/day. With a 1-sided 5% significance level and 90% power, the study required 31 subjects per group (62 total) in order to demonstrate the lack of inferiority hypothesis. However, it was anticipated that for some infants in the cream group, their human milk (e.g., mother's or donor) may never fall below 67.6 kcal /100 mL (20 kcal/oz) based on data from Wojcik et al. (J Am Diet Assoc, 109:137-140, 2009) that demonstrated this might occur as much as 25% of the time. As a result, the sample size for the cream test group was increased by about 25% to 39 subjects, and the control group was also increased to keep the study balanced. The resulting total sample size was 78 subjects. The cream test group was an intent-to-treat (ITT) group in spite of the fact that some of the infants may not receive the cream supplement.

Once human milk fortification was initiated and tolerance was established based on clinical observation, the human milk was tested each time a new container of human milk was used to prepare feedings. The caloric content of the human milk was measured using a commercially available device (the Unity SpectraStar near infrared spectrometer) provided for this purpose. Each time the caloric content of the human milk for an infant in the cream test group fell below 67.6 kcal /100 mL (20 kcal/oz), the volume of the human cream composition needed to bring the caloric content as close as possible to 67.6 kcal /100 mL (20 kcal/oz) was determined. The amount to be added was calculated to the nearest ml by rounding down for 0.1-0.4 ml and rounding up for 0.5-0.9 ml in order to avoid imprecision due to the calorie measuring device used in the nutrition preparation area. Prior to adding the calculated volume of the cream composition, an equal volume of human milk was removed from the container, thereby maintaining the same total volume. The calorie-adjusted, if required, human milk and subsequent Prolact+ H²MF® was then provided according to institutional standard care. The infants randomized into the control group were provided the human milk and Prolact+ H²MF® according to the institutional standard of care without any use of the milk analysis, as is typical for the vast majority of neonatal intensive care units.

The nutritional algorithm was continued until the infant reached 36 weeks corrected gestational age or was weaned from the fortifier, whichever came first, or was otherwise removed from the study (e.g., due to transfer to a non-study institution, removal from the study, or death). Results are listed below in table 1.

Data collection forms were provided in order to capture the relevant information indicated below. As noted above, the primary measure of efficacy for this study was the rate of change of weight from the initiation of enteral feeding through 36 weeks corrected gestational age or weaning from the fortifier, whichever came first. Based on the ITT paradigm defined above, the rate of change of weight was determined for the period of time in the study for any subject that failed to complete the study period for any reason. In order to provide a valid comparison between the study subjects, the rate of weight gain was reported as g/kg/day. Any subject that failed to complete the study period was dropped from any calculations with respect to this primary endpoint.

At study entry, the following variables were recorded: birth weight, gestational age, gender, Apgar score at 5 minutes, use of mechanical ventilation, use of prenatal or postnatal steroids, and the age in days at which enteral feeding was initiated. In addition, the presence of any of the following clinical conditions either at the time of study entry or occurring during the course of the study were noted: transient tachypnea of newborn (TTN), intraventricular hemorrhage (IVH), and patent ductus arteriosus (PDA).

Head circumference increment for the study period and length increment for the study period were determined. Length and head circumference were measured on a weekly basis during the study period and recorded as cm/week. The use of medications that influence growth and development, including postnatal steroids (e.g., hydrocortisone and dexamethasone), caffeine and other methylxanthine preparations were also recorded.

The daily amount of all enteral nutrition was recorded in units of ml. This quantity was subdivided into the various types of nutrition used, i.e., mother's milk, donor milk, cream supplement, Prolact+ H²MF®, and any other nutritional support. In the event of feeding intolerance or discontinuation of enteral feeding and the infant returning to total parenteral nutrition (TPN), the assumed cause was identified. In addition, the total number of days of TPN was recorded for the study period.

Although not a focus of this study, occurrences of sepsis, necrotizing enterocolitis (NEC) and other related infectious outcomes were recorded. In addition, basic demographic and medical information on each subject was collected and recorded. These variables included gestational age, birth weight (including whether the birth weight was appropriate for gestational age (AGA) or small for gestational age (SGA) based on standard criteria), gender, and racial group.

The results of the study indicated that infants in the cream test group grew at a faster pace with respect to weight, and length when compared to the control group clearly demonstrating the superior efficacy of the claimed products compared to current feeding protocols.

Table 1 is a summary of the growth parameter velocities defined over the study period for the 78 patients in the study. There were no differences in baseline demographics except race (p=0.02). There were no cases of NEC and no differences in the rates of sepsis between study groups. The one-sided 95% lower bound of the confidence interval for the difference in mean velocity (cream-control) in terms of g/kg/day was 0.38. This was well above the value of -3 indicated as a definition of lack of inferiority.

**Table 1**

| **Parameter** | **Cream Group (n=39)** | **Control Group (p=39)** | **p-value (Two-sample t-test with allowance for unequal variances)** |
|---|---|---|---|
| Length velocity (cm/wk) | 1.03 ±0.33 | 0.83±0.41 | 0.02 |
| Head Velocity (cm/wk) | 0.90±0.19 | 0.84±0.22 | 0.21 |
| Weight Velocity (g/day) | 19.8±5.1 | 17.1±6.4 | 0.045 |
| Weight Velocity (g/kg/day) | 14.0±2.5 | 12.4±3.9 | 0.03 |

**Table 2 shows the growth velocities defined from birth and from the time to regain birth weight**

| **Parameter** | **Cream group (n=39)** | **Control group (n=39)** | **p-value (Wilcoxon rank-sum test)** |
|---|---|---|---|
| Length velocity from birth (cm/wk) | 0.95±0.34 | 0.76±0.29 | 0.01 |
| Head velocity from birth (cm/wk) | 0.64±0.19 | 0.62±0.21 | 0.58 |
| Weight velocity from birth (g/day) | 16.5±4.6 | 14.6±5.7 | 0.19 |
| Weight velocity from birth (g/kg/day) | 11.4±2.1 | 10.3±3.4 | 0.11 |
| Weight velocity calculated from time infant regained birthweight (g/day) | 21.8±5.4 | 18.6±6.4 | 0.02 |
| Weight velocity calculated from time infant regained birthweight (g/kg/day) | 15.7±2.5 | 13.7±4.0 | 0.02 |

## Claims

1. A human milk cream composition for enteral administration to an infant comprising pasteurized cream derived from human milk, wherein the composition comprises 2.5 kcal/ml and 25% fat.

2. The human milk cream composition of claim 1, further comprising human skim milk permeate or deionized water.

3. A method of making a human milk cream composition for enteral administration to an infant comprising the steps of:
(a) separating a pool of human milk into a cream portion and a skim milk portion,
(b) formulating the cream portion to obtain a cream composition comprising 2.5 kcal/ml and 25% fat, and
(c) pasteurizing the cream composition;
wherein step (b) comprises measuring the caloric content of the cream portion, and if the cream portion is above 2.5 kcal/mL, adding a volume of permeate obtained from ultrafiltration of the skim milk portion or deionized water to the cream portion.

4. The method of claim 3, wherein the separating step is via ultracentrifugation.

5. The method of claim 3, further comprising ultra filtering water from the skim milk portion, thereby obtaining a human skim milk permeate.

6. The method of claim 3, further comprising a step of testing the pool of human milk for adulterants, contaminants, drugs and/or pathogens.

7. The method of claim 6, wherein the testing step comprises PCR analysis for HIV, HBV and HCV.

8. The method of claim 6, wherein the testing step detects bovine protein.

9. The method of claim 6, wherein the testing step comprises testing for one or more drugs selected from amphetamines, benzodiazepine, cocaine, methamphetamines, opiates, THC, and principle metabolites thereof.

10. The method of claim 3, wherein the pool of human milk is from one or more donors.

## Patentansprüche

1. Muttermilchsahnezusammensetzung zur enteralen Verabreichung an einen Säugling, umfassend pasteurisierte Sahne, die von Muttermilch abgeleitet ist, wobei die Zusammensetzung 2,5 kcal/ml und 25 % Fett umfasst.

2. Muttermilchsahnezusammensetzung nach Anspruch 1, weiterhin umfassend entrahmtes Muttermilchpermeat oder entionisiertes Wasser.

3. Verfahren zur Herstellung einer Muttermilchsahnezusammensetzung zur enteralen Verabreichung an einen Säugling, umfassend die Schritte:
(a) Trennen eines Muttermilchpools in einen Sahneteil und einen entrahmten Milchteil,
(b) Formulieren des Sahneteils, um eine Sahnezusammensetzung zu erhalten, die 2,5 kcal/ml und 25 % Fett umfasst, und
(c) Pasteurisieren der Sahnezusammensetzung;
wobei Schritt (b) ein Messen des Kaloriengehalts des Sahneteils, und wenn der Sahneteil über 2,5 kcal/ml liegt, Zugeben eines Volumens von Permeat, das aus einer Ultrafiltration des entrahmten Milchteils erhalten wird, oder von entionisiertem Wasser zu dem Sahneteil umfasst.

4. Verfahren nach Anspruch 3, wobei der Trennschritt mittels Ultrazentrifugation ist.

5. Verfahren nach Anspruch 3, weiterhin umfassend ein Ultrafiltrieren von Wasser aus dem entrahmten Milchteil, wodurch ein entrahmtes Muttermilchpermeat erhalten wird.

6. Verfahren nach Anspruch 3, weiterhin umfassend einen Schritt eines Testens des Muttermilchpools auf Verunreinigungen, Kontaminanten, Rauschgifte und/oder Pathogene.

7. Verfahren nach Anspruch 6, wobei der Testschritt eine PCR-Analyse auf HIV, HBV und HCV umfasst.

8. Verfahren nach Anspruch 6, wobei der Testschritt Rinderprotein nachweist.

9. Verfahren nach Anspruch 6, wobei der Testschritt ein Testen auf einen oder mehrere Rauschgifte umfasst, die aus Amphetaminen, Benzodiazepin, Kokain, Methamphetaminen, Opiaten, THC und Hauptmetaboliten davon ausgewählt sind.

10. Verfahren nach Anspruch 3, wobei der Muttermilchpool von einer oder mehreren Spenderinnen ist.

## Revendications

1. Composition de crème de lait maternel destinée à être administrée par voie entérale à un nouveau-né, comprenant de la crème pasteurisée dérivée de lait maternel, dans laquelle la composition comprend 2,5 kcal/ml et 25 % de matière grasse.

2. Composition de crème de lait maternel selon la revendication 1, comprenant en outre du perméat de lait maternel écrémé ou de l'eau déminéralisée.

3. Procédé de préparation d'une composition de crème de lait maternel destinée à être administrée par voie entérale à un nouveau-né, comprenant les étapes consistant à :
(a) séparer un pool de lait maternel en une partie de crème et une partie de lait écrémé,
(b) formuler la partie de crème pour obtenir une composition de crème comprenant 2,5 kcal/ml et 25 % de matière grasse, et
(c) pasteuriser la composition de crème ;
dans lequel l'étape (b) comprend la mesure de la teneur en calories de la partie de crème et, si la partie de crème est supérieure à 2,5 kcal/ml, l'ajout d'un volume de perméat obtenu par ultrafiltration de la partie de lait écrémé ou d'eau déminéralisée à la partie de crème.

4. Procédé selon la revendication 3, dans lequel l'étape de séparation se fait par ultracentrifugation.

5. Procédé selon la revendication 3, comprenant en outre la séparation d'eau d'avec la partie de lait écrémé par ultrafiltration pour obtenir ainsi un perméat de lait maternel écrémé.

6. Procédé selon la revendication 3, comprenant en outre une étape de test du pool de lait maternel pour rechercher des adultérants, des contaminants, des drogues et/ou des pathogènes.

7. Procédé selon la revendication 6, dans lequel l'étape de test comprend une analyse PCR pour détecter le VIH, le VHB et le VHC.

8. Procédé selon la revendication 6, dans lequel l'étape de test détecte des protéines bovines.

9. Procédé selon la revendication 6, dans lequel l'étape de test comprend un test pour rechercher une ou plusieurs drogues choisies parmi des amphétamines, la benzodiazépine, la cocaïne, des méthamphétamines, des opiacés, le THC et les principaux métabolites de ces drogues.

10. Procédé selon la revendication 3, dans lequel le pool de lait maternel provient d'une ou plusieurs donneuses.
